# EUROPÄISCHE PATENTSCHRIFT

(11) **EP 3 317 890 B1**
(45) Veröffentlichungstag und Bekanntmachung des Hinweises auf die Patenterteilung: **21.10.2020**
(21) Anmeldenummer: 16722108.4
(22) Anmeldetag: 02.05.2016
(51) Int. Cl.: H01F 7/08, H01F 7/16, F02M 51/06, F16K 27/02, F16K 27/04, F16K 31/06

(54) **MAGNETBAUGRUPPE UND KRAFTSTOFFINJEKTOR MIT EINER MAGNETBAUGRUPPE**
MAGNET ASSEMBLY AND FUEL INJECTOR COMPRISING A MAGNET ASSEMBLY
SOUS-ENSEMBLE MAGNÉTIQUE ET INJECTEUR DE CARBURANT POURVU D'UN SOUS-ENSEMBLE MAGNÉTIQUE

(30) Priorität: 30.06.2015 DE 102015212130
(43) Veröffentlichungstag der Anmeldung: 09.05.2018
(73) Patentinhaber: Robert Bosch GmbH, 70442 Stuttgart (DE)
(72) Erfinder: KRAUSE, Michael, 67705 Trippstadt (DE); CLAUSS, Helmut, 71735 Eberdingen (DE); STEINBERG, Klemens, 71665 Vaihingen/Enz-Enzweihingen (DE); TUERKER, Oezguer, 70839 Gerlingen (DE)
(86) Internationale Anmeldenummer: PCT/EP2016/059742
(87) Internationale Veröffentlichungsnummer: WO 2017/001085

(56) Entgegenhaltungen:
- EP-A2- 2 747 095
- DE-A1-102012 205 365
- DE-T2- 69 723 251
- US-A1- 2010 007 224

## Beschreibung

### Stand der Technik

Die Erfindung betrifft eine Magnetbaugruppe nach dem Oberbegriff des Anspruchs 1. Ferner betrifft die Erfindung einen Kraftstoffinjektor unter Verwendung einer erfindungsgemäßen Magnetbaugruppe.

Eine Magnetbaugruppe nach dem Oberbegriff des Anspruchs 1 ist aus der EP2747095 bekannt. Eine Magnetgruppe ist weiter aus der DE 10 2009 001 706 A1 der Anmelderin bekannt. Die bekannte Magnetbaugruppe weist einen Magnetkern mit einer in dem Magnetkern eingebetteten Magnetspule auf, wobei der Magnetkern radial von einer Magnethülse umfasst ist, die der axialen Positionierung bzw. Fixierung des Magnetkerns innerhalb eines Injektorgehäuses dient. Hierzu weist die Magnethülse einen radial nach innen ragenden Halteabschnitt in Form eines Halteflansches auf, der unter Zwischenlage einer Restluftspaltscheibe an einer Stirnseite des Magnetkerns anliegt. Die Restluftspaltscheibe wirkt wiederum in einer axialen Endstellung eines Magnetankers, der innerhalb des Injektors längsbeweglich angeordnet ist, mit einer (planen) Stirnfläche des Magnetankers zusammen, an der die Stirnfläche anliegen kann. Durch die Restluftspaltscheibe wird in bekannter Art und Weise ein Anhaften des Magnetankers an dem Magnetkern verhindert. Nachteilig bei einer derartigen Konstruktion ist es, dass durch die separate Restluftspaltscheibe der Fertigungs- und Montageaufwand einer derartigen Magnetbaugruppe und somit auch eines eine derartige Magnetbaugruppe aufweisenden Kraftstoffinjektors relativ hoch ist. Darüber hinaus ist die axiale Bauhöhe der Magnetbaugruppe um den Betrag der Dicke der Restluftspaltscheibe vergrößert.

Um eine separate Restluftspaltscheibe zur Einstellung eines Restluftspalts vermeiden zu können, ist es darüber hinaus aus der DE 10 2008 001 122 A1 der Anmelderin bekannt, die dem Magnetkern zugewandte Stirnfläche des Magnetankers mit einer radial umlaufenden Erhebung auszustatten, so dass der Magnetanker lediglich im Bereich der eine relativ kleine Fläche aufweisenden Erhebung an dem Magnetkern anliegen kann. Nachteilig dabei ist jedoch der zusätzliche Bearbeitungsaufwand des Magnetankers im Bereich der dem Magnetkern zugewandten Stirnfläche.

### Offenbarung der Erfindung

Ausgehend von dem dargestellten Stand der Technik liegt der Erfindung die Aufgabe zugrunde, eine Magnetbaugruppe nach dem Oberbegriff des Anspruchs 1 derart weiterzubilden, dass unter Verzicht auf eine Restluftspaltscheibe eine vorteilhafte konstruktive Ausbildung der Magnetbaugruppe mit relativ geringen Fertigungs- bzw. Herstellkosten ermöglicht wird.

Diese Aufgabe wird erfindungsgemäß bei einer Magnetbaugruppe mit den kennzeichnenden Merkmalen des Anspruchs 1 gelöst. Die Magnethülse weist einen radial in Richtung zur Längsachse der Magnethülse ragenden Halteabschnitt zur axialen Fixierung des Magnetkerns mit einem in radialer Überdeckung mit dem Magnetanker angeordneten Distanzabschnitt zur Einstellung des Restluftspalts auf. Eine derartige konstruktive Ausbildung der Magnethülse ermöglicht es, diese auch zur Einstellung des Restluftspalts zwischen dem Magnetkern und dem Magnetanker auszubilden, so dass auf eine separate Restluftspaltscheibe verzichtet werden kann. Insbesondere ermöglicht es eine derartige konstruktive Ausbildung, auf eine aufwändige, weil relativ geringe Toleranzen erforderliche Bearbeitung des Magnetankers verzichten zu können.

Vorteilhafte Weiterbildungen der erfindungsgemäßen Magnetbaugruppe sind in den Unteransprüchen angeführt.

Die axiale Höhe einer derartigen Magnetbaugruppe lässt sich minimieren, wenn der Halteabschnitt auf der dem Magnetkern zugewandten Seite unmittelbar an einer Stirnfläche des Magnetkerns anliegt, und wenn der Distanzabschnitt der Magnethülse in der Endstellung des Magnetankers unmittelbar an dem Distanzabschnitt anliegt. Somit wird eine Wirkverbindung des Magnetankers über den Distanzabschnitt an dem Magnetkern ohne weitere Elemente ermöglicht.

Zur Minimierung der Flächenpressungen und des Verschleißes an den miteinander zusammenwirkenden Bauteilen ist es darüber hinaus von Vorteil, wenn der Halteabschnitt auf der dem Magnetkern zugewandten Seite eine ebene, rechteckig zur Längsachse der Magnethülse angeordnete erste Anlagefläche für den Magnetkern aufweist, und wenn der Distanzabschnitt auf der dem Magnetanker zugewandten Seite eine plane, rechtwinklig zur Achse angeordnete zweite Anlagefläche für den Magnetanker aufweist.

Zur Erzielung einer möglichst gleichmäßigen Biegespannung in dem mit dem Magnetkern zusammenwirkenden Halteabschnitt und einer möglichst großen Querschnittsfläche des Magnetankers ist es darüber hinaus von Vorteil, wenn sich der Querschnitt des Halteabschnitts in Richtung zur Achse hin verjüngt und im Bereich des Distanzabschnitts am geringsten ist.

Ein derartiger, sich in Richtung der Längsachse der Magnethülse verjüngender Querschnitt des Halteabschnitts lässt sich in fertigungstechnisch besonders bevorzugter Art und Weise dadurch erzielen, dass der Halteabschnitt auf der dem Magnetkern abgewandten Seite eine gegenüber der Längsachse der Magnethülse schräg verlaufende Unterseite aufweist.

Grundsätzlich lässt sich der Restluftspalt zwischen dem Magnetkern und dem Magnetanker über den beanspruchten Distanzabschnitt der Magnethülse einstellen. Da ein derartiger Restluftspalt möglichst gering sei soll, würde dies beim Vorhandensein einer ebenen Stirnfläche des Magnetankers jedoch einen relativ dünnen, aus fertigungstechnischer Sicht nur mit relativ hohem Aufwand zu fertigenden Distanzabschnitt an der Magnethülse zur Folge haben. Es wird daher erfindungsgemäß vorgeschlagen, dass der Magnetanker im Bereich des Distanzabschnitts eine radial umlaufende Vertiefung aufweist, deren Tiefe geringer ist als die Höhe des Distanzabschnitts. Dadurch lässt sich ein aus Fertigungsgründen besonders einfach herstellbarer Distanzabschnitt mit einer relativ großen Bauhöhe an der Magnethülse ausbilden, der darüber hinaus auch eine relativ große Stabilität bzw. Steifheit aufweist. Im Bereich der Endstellung des Magnetankers taucht dieser mit seiner Vertiefung axial in den Bereich des Distanzabschnitts ein und liegt am Grund der Vertiefung an dem Distanzabschnitt an. Der Restluftspalt wird in diesem Fall durch die Höhendifferenz zwischen der Vertiefung an dem Magnetanker und der Dicke des Distanzabschnitts eingestellt bzw. ausgebildet.

Um bei der Hubbewegung des Magnetankers ein gewisses Bewegungsspiel des Magnetankers zu ermöglichen, ohne dass der Magnetanker an der Magnethülse im Bereich der Vertiefung anschlägt bzw. mit dieser in Berührung gelangt, ist es darüber hinaus von Vorteil, wenn zwischen dem Distanzabschnitt und dem Magnetanker im Bereich der Vertiefung ein Radialspalt ausgebildet ist.

Die Erfindung umfasst auch einen Kraftstoffinjektor mit einer soweit beschriebenen Magnetbaugruppe, wobei der Kraftstoffinjektor dieselben Vorteile aufweist wie diese im Rahmen der Beschreibung der erfindungsgemäßen Magnetbaugruppe erläutert wurden.

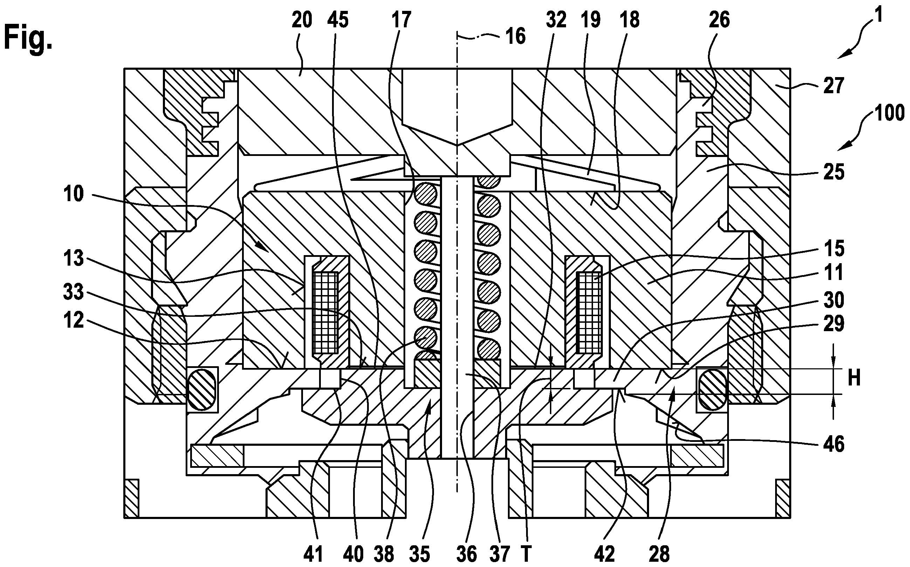

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in der einzigen Figur einen Teilbereich eines Kraftstoffinjektors im Bereich einer erfindungsgemäßen Magnetbaugruppe in einem Längsschnitt.

In der einzigen Figur ist ein Teilbereich eines Kraftstoffinjektors 100 gezeigt, wie er als Bestandteil eines sogenannten Common-Rail-Einspritzsystems zum Einspritzen von Kraftstoff in den Brennraum einer insbesondere selbstzündenden Brennkraftmaschine dient.

Der Kraftstoffinjektor 100 weist ein Injektorgehäuse 1 auf, in dem eine Magnetbaugruppe 10 angeordnet bzw. aufgenommen ist. Die Magnetbaugruppe 10 umfasst einen im Wesentlichen zylindrisch ausgebildeten Magnetkern 11, der an einer Stirnseite 12 einen radial umlaufenden, ringförmigen Aufnahmeraum 13 zur Aufnahme einer Magnetspule 15 aufweist.

Der Magnetkern 11 weist darüber hinaus eine konzentrisch zu einer Längsachse 16 ausgebildete Durchgangsöffnung 17 auf. Die der Stirnseite 12 gegenüberliegende andere Stirnseite 18 des Magnetkerns 11 stützt sich über eine Tellerfeder 19 axial am Grund einer Halteplatte 20 ab.

Der Magnetkern 11 ist radial von einer Magnethülse 25 umfasst, die über eine Gewindeverbindung 26 und eine im Einzelnen nicht gezeigte Überwurfmutter 27 axial in Richtung des Bauteils 20 verspannbar ist. Die Magnethülse 25 besteht bevorzugt aus einem nicht magnetischen Material. Die Magnethülse 25 weist einen flanschartigen, radial in Richtung zur Längsachse 16 des Magnetkerns 11 und der Magnethülse 25 ragenden Halteabschnitt 28 auf, der auf der der Stirnseite 12 zugewandten Seite eine ebene, senkrecht zur Längsachse 16 der Magnethülse 25 verlaufende erste Anlagefläche 29 aufweist, an der die Stirnseite 12 des Magnetkerns 11 anliegt. Der der Längsachse 16 zugewandte Endbereich des Halteabschnitts 28 bildet einen Distanzabschnitt 30 aus, der zur Einstellung eines Restluftspalts 32 zwischen der Stirnseite 12 des Magnetkerns 11 in einem radial innerhalb des Distanzabschnitt 30 angeordneten Bereich und einer Stirnfläche 33 eines als Flachanker ausgebildeten Magnetankers 35 dient.

Der Magnetanker 35, der zur zumindest mittelbaren Betätigung eines in dem Injektorgehäuse 1 angeordneten Einspritzglieds (Düsennadel) dient, wirkt in üblicher Art und Weise mit der Magnetspule 15 zusammen, derart, dass bei einer Bestromung der Magnetspule 15 der Magnetanker 35, welcher in Richtung der Längsachse 16 hubbeweglich angeordnet ist, in Richtung des Magnetkerns 11 bewegt wird.

Der Magnetanker 25 weist eine Durchgangsöffnung 36 auf, in der ein Führungsstift 37 eingesteckt ist, welcher sich im Wesentlichen axial innerhalb der Durchgangsöffnung 17 des Magnetkerns 11 erstreckt. Der Führungsstift 37 ist von einer Druckfeder 38 radial umfasst, welche sich axial an der Stirnseite 18 des Bauteils 20 abstützt, um bei nicht bestromter Magnetspule 15 den Magnetanker 35 mit einer Kraft zu beaufschlagen, die den Magnetanker 35 von dem Magnetkern 11 wegdrückt.

Der Magnetanker 35 weist auf der dem Magnetkern 11 zugewandten Seite, insbesondere im Bereich des Restluftspalts 32, eine plane bzw. ebene Stirnfläche auf. Weiterhin weist der Magnetanker 35 eine radial umlaufende Vertiefung 40 auf, in deren Bereich insbesondere in der in der Figur gezeigten Endstellung der Distanzabschnitt 30 der Magnethülse 25 angeordnet ist. Die Vertiefung 40 weist eine Tiefe T auf, die zur Ausbildung des gewünschten Restluftspalts 32 etwas geringer ist als die Höhe H der Magnethülse 25 im Bereich des Distanzabschnitts 30.

Der Distanzabschnitt 30 weist auf der dem Grund 41 der Vertiefung 40 zugewandten Seite eine ebene, rechtwinklig zur Längsachse 16 verlaufende zweite Anlagefläche 42 auf, in deren Bereich der Magnetanker 35 unter Ausbildung des Restluftspalts 32 anliegt. Weiterhin ist zwischen dem Distanzabschnitt 30 und der Vertiefung 40 im Magnetanker 35 ein radial umlaufender Spalt 45 ausgebildet. Entsprechend der Darstellung der Figur verjüngt sich der Querschnitt des Halteabschnitts 28 zur Längsachse 16 hin stetig, bis dieser im Bereich des Distanzabschnitts 30 einen in etwa konstanten Wert aufweist. Hierzu ist es vorgesehen, dass die dem Magnetkern 11 abgewandte Seite des Halteabschnitts 28 eine gegenüber der Längsachse 16 schräg verlaufende Unterseite 46 aufweist. Weiterhin ist der Distanzabschnitt 30 in radialer Überdeckung mit dem Aufnahmeraum 13 für die Magnetspule 15 angeordnet.

Die soweit beschriebene Magnetbaugruppe 10 bzw. der Kraftstoffinjektor 100 können in vielfältiger Art und Weise abgewandelt bzw. modifiziert werden, ohne vom Erfindungsgedanken abzuweichen.

## Patentansprüche

1. Magnetbaugruppe (10), mit einem Magnetkern (11) und einer diesen aufnehmenden Magnethülse (25), und mit einem mit dem Magnetkern (11) zusammenwirkenden, entlang einer Längsachse (16) der Magnethülse (25) längsbeweglich angeordneten Magnetanker (35), der in einer Endstellung unter Ausbildung eines Restluftspalts (32) zu einer dem Magnetanker (35) gegenüberliegenden Stirnfläche (33) des Magnetkerns (11) angeordnet ist, wobei die Magnethülse (25) einen radial in Richtung zur Längsachse (16) ragenden Halteabschnitt (28) zur axialen Fixierung des Magnetkerns (11) mit einem in radialer Überdeckung mit dem Magnetanker (35) angeordneten Distanzabschnitt (30) zur Einstellung des Restluftspalts (32) aufweist und **dadurch gekennzeichnet, dass** der Magnetanker (35) im Bereich des Distanzabschnitts (30) eine radial umlaufende Vertiefung (40) aufweist, deren Tiefe (T) geringer ist als die Höhe (H) des Distanzabschnitts (30).

2. Magnetbaugruppe nach Anspruch 1,
**dadurch gekennzeichnet,**
**dass** der Halteabschnitt (28) auf der dem Magnetkern (11) zugewandten Seite unmittelbar an der Stirnfläche (33) des Magnetkerns (11) anliegt, und dass der Distanzabschnitt (30) in der Endstellung des Magnetankers (35) unmittelbar am Magnetanker (35) anliegt.

3. Magnetbaugruppe nach Anspruch 1 oder 2,
**dadurch gekennzeichnet,**
**dass** der Halteabschnitt (28) auf der dem Magnetkern (11) zugewandten Seite eine ebene, rechtwinklig zur Längsachse (16) angeordnete erste Anlagefläche (29) für den Magnetkern (11) aufweist, und dass der Distanzabschnitt (30) auf der dem Magnetanker (35) zugewandten Seite eine ebene, rechtwinklig zur Längsachse (16) angeordnete zweite Anlagefläche (42) für den Magnetanker (35) aufweist.

4. Magnetbaugruppe nach einem der Ansprüche 1 bis 3,
**dadurch gekennzeichnet,**
**dass** sich der Querschnitt des Halteabschnitts (28) in Richtung zur Längsachse (16) hin verjüngt und im Bereich des Distanzabschnitts (30) am geringsten ist.

5. Magnetbaugruppe nach Anspruch 4,
**dadurch gekennzeichnet,**
**dass** der Halteabschnitt (28) auf der dem Magnetkern (11) abgewandten Seite eine gegenüber der Längsachse (16) schräg verlaufende Unterseite (46) aufweist.

6. Magnetbaugruppe nach einem der Ansprüche 1 bis 5,
**dadurch gekennzeichnet,**
**dass** der Magnetkern (11) auf der dem Magnetanker (35) zugewandten Seite einen ringförmigen Aufnahmeraum (13) zur Aufnahme einer Magnetspule (15) aufweist, und dass der Distanzabschnitt (30) in radialer Überdeckung mit dem Aufnahmeraum (13) angeordnet ist.

7. Magnetbaugruppe nach Anspruch 1,
**dadurch gekennzeichnet,**
**dass** zwischen dem Distanzabschnitt (30) und dem Magnetanker (35) im Bereich der Vertiefung (40) ein Radialspalt (45) ausgebildet ist.

8. Kraftstoffinjektor (100) mit einer Magnetbaugruppe (10) nach einem der Ansprüche 1 bis 7.

## Claims

1. Magnet assembly (10), with a magnetic core (11) and a magnetic sleeve (25) which receives the said magnetic core (11), and with a solenoid armature (35) which interacts with the magnetic core (11), is arranged such that it can be moved longitudinally along a longitudinal axis (16) of the magnetic sleeve (25), and, in an end position, is arranged with the configuration of a residual air gap (32) with respect to an end face (33) of the magnetic core (11), which end face (33) lies opposite the solenoid armature (35), the magnetic sleeve (25) having a holding section (28) which protrudes radially in the direction of the longitudinal axis (16) for axial fixing of the magnetic core (11) to a spacer section (30) which is arranged in a radial overlap with the solenoid armature (35) in order to set the residual air gap (32), and **characterized in that**, in the region of the spacer section (30), the solenoid armature (35) has a radially circumferential depression (40), the depth (T) of which is smaller than the height (H) of the spacer section (30).

2. Magnet assembly according to Claim 1, **characterized in that**, on the side which faces the magnetic core (11), the holding section (28) bears directly against the end face (33) of the magnetic core (11), and **in that**, in the end position of the solenoid armature (35), the spacer section (30) bears directly against the solenoid armature (35) .

3. Magnet assembly according to Claim 1 or 2, **characterized in that**, on the side which faces the magnetic core (11), the holding section (28) has a planar, first bearing face (29) for the magnetic core (11), which first bearing face (29) is arranged at a right angle with respect to the longitudinal axis (16), and **in that**, on the side which faces the solenoid armature (35), the spacer section (30) has a planar, second bearing face (42) for the solenoid armature (35), which second bearing face (42) is arranged at a right angle with respect to the longitudinal axis (16).

4. Magnet assembly according to one of Claims 1 to 3, **characterized in that** the cross section of the holding section (28) tapers in the direction of the longitudinal axis (16) and is smallest in the region of the spacer section (30).

5. Magnet assembly according to Claim 4, **characterized in that**, on the side which faces away from the magnetic core (11), the holding section (28) has an underside (46) which runs in an oblique manner with respect to the longitudinal axis (16).

6. Magnet assembly according to one of Claims 1 to 5, **characterized in that**, on the side which faces the solenoid armature (35), the magnetic core (11) has an annular receiving space (13) for receiving a magnet coil (15), and **in that** the spacer section (30) is arranged in a radial overlap with the receiving space (13).

7. Magnet assembly according to Claim 1, **characterized in that** a radial gap (45) is configured between the spacer section (30) and the solenoid armature (35) in the region of the depression (40).

8. Fuel injector (100) with a magnet assembly (10) according to one of Claims 1 to 7.

## Revendications

1. Ensemble magnétique (10) comprenant un noyau magnétique (11) et un manchon magnétique (25), recevant celui-ci, et un induit magnétique (35) qui coopère avec le noyau magnétique (11), qui est déplaçable longitudinalement le long d'un axe longitudinal (16) du manchon magnétique (25) et qui est disposé dans une position d'extrémité de manière à former un entrefer résiduel (32) par rapport à une face frontale (33) du noyau magnétique (11) qui est opposée à l'induit magnétique (35), le manchon magnétique (25) comportant une portion de retenue (28) qui fait saillie radialement en direction de l'axe longitudinal (16) et qui est destinée à fixer axialement le noyau magnétique (11) à une portion d'espacement (30), disposée de manière à chevaucher radialement l'induit magnétique (35), de manière à régler l'entrefer résiduel (32) et **caractérisé en ce que** l'induit magnétique (35) comporte un évidement radialement circonférentiel (40) qui est ménagé dans la région de la portion d'espacement (30) et dont la profondeur (T) est inférieure à la hauteur (H) de la portion d'espacement (30).

2. Ensemble magnétique selon la revendication 1,
**caractérisé en ce que**
la portion de retenue (28) est en appui, du côté dirigé vers le noyau magnétique (11), directement sur la face frontale (33) du noyau magnétique (11), et **en ce que** la portion d'espacement (30) est en appui, dans la position d'extrémité de l'induit magnétique (35), directement sur l'induit magnétique (35).

3. Ensemble magnétique selon la revendication 1 ou 2, **caractérisé en ce que** la portion de retenue (28) comporte, du côté dirigé vers le noyau magnétique (11), une première surface d'appui plane (29) disposée perpendiculairement à l'axe longitudinal (16) et destinée au noyau magnétique (11) et **en ce que** la portion d'espacement (30) comporte, du côté dirigé vers l'induit magnétique (35), une deuxième surface d'appui plane (42) disposée perpendiculairement à l'axe longitudinal (16) et destinée à l'induit magnétique (35) .

4. Ensemble magnétique selon l'une des revendications 1 à 3, **caractérisé en ce que** la section transversale de la portion de retenue (28) s'amincit en direction de l'axe longitudinal (16) et est la plus petite au niveau de la portion d'espacement (30).

5. Ensemble magnétique selon la revendication 4, **caractérisé en ce que** la portion de retenue (28) comporte, du côté opposé au noyau magnétique (11), une face inférieure (46) qui s'étend obliquement par rapport à l'axe longitudinal (16).

6. Ensemble magnétique selon l'une des revendications 1 à 5, **caractérisé en ce que** le noyau magnétique (11) comporte, du côté dirigé vers l'induit magnétique (35), un espace de réception annulaire (13) destiné à recevoir une bobine magnétique (15), et **en ce que** la portion d'espacement (30) est disposée de manière à chevaucher radialement l'espace de réception (13).

7. Ensemble magnétique selon la revendication 1, **caractérisé en ce qu'**un entrefer radial (45) est formé entre la portion d'espacement (30) et l'induit magnétique (35) dans la région de l'évidement (40).

8. Injecteur de carburant (100) comportant un ensemble magnétique (10) selon l'une des revendications 1 à 7.
